# FASCICULE DE BREVET EUROPEEN

(11) **EP 3 136 492 B1**
(45) Date de publication et mention de la délivrance du brevet: **17.10.2018**
(21) Numéro de dépôt: 16185425.2
(22) Date de dépôt: 24.08.2016
(51) Int. Cl.: H01M 8/241, H01M 8/0258, H01M 8/04089, H01M 8/0297, H01M 8/04082, H01M 8/00

(54) **EMPILEMENT DE CELLULES ELECTROCHIMIQUES REPARTIES EN GROUPES DISTINCTS COMPORTANT UN COMPARTIMENT D'HOMOGENEISATION**
STAPEL VON ELEKTROCHEMISCHEN ZELLEN, DIE IN VERSCHIEDENE GRUPPEN AUFGETEILT SIND, DIE EIN HOMOGENISIERUNGSFACH UMFASSEN
STACK OF ELECTROCHEMICAL CELLS DISTRIBUTED INTO SEPARATE GROUPS COMPRISING A HOMOGENISATION COMPARTMENT

(30) Priorité: 26.08.2015 FR 1557941
(43) Date de publication de la demande: 01.03.2017
(73) Titulaire: Commissariat à l'énergie atomique et aux énergies alternatives, 75015 Paris (FR)
(72) Inventeur: POIROT-CROUVEZIER, Jean-Philippe, 38450 SAINT GEORGES DE COMMIERS (FR)
(74) Mandataire: GIE Innovation Competence Group

(56) Documents cités:
- EP-A2- 1 672 726
- WO-A1-2004/102710
- FR-A1- 3 016 243
- US-A- 6 015 633
- US-A1- 2003 215 694
- US-A1- 2009 017 355

## Description

### DOMAINE TECHNIQUE

Le domaine de l'invention est celui des réacteurs électrochimiques, tels que, par exemple, les piles à combustible et les électrolyseurs, et plus précisément les réacteurs comportant un empilement de cellules électrochimiques réparties en plusieurs groupes de cellules distincts destinés à être alimentés sélectivement en un même gaz réactif.

### ÉTAT DE LA TECHNIQUE ANTÉRIEURE

Une pile à combustible comporte un empilement de cellules électrochimiques, comprenant chacune une anode et une cathode séparées électriquement l'une de l'autre par un électrolyte, dans lesquelles a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène), par exemple contenu dans de l'air, est amené au contact de la cathode. La réaction électrochimique est subdivisée en deux demi-réactions, une oxydation et une réduction, qui ont lieu respectivement à l'interface anode/électrolyte et à l'interface cathode/électrolyte. Elle requiert la présence d'un conducteur ionique entre les deux électrodes, à savoir l'électrolyte, et un conducteur électronique formé par le circuit électrique externe. L'empilement de cellules est le lieu de la réaction électrochimique : les réactifs doivent y être apportés, les produits et les espèces non réactives doivent en être évacués, ainsi que la chaleur produite.

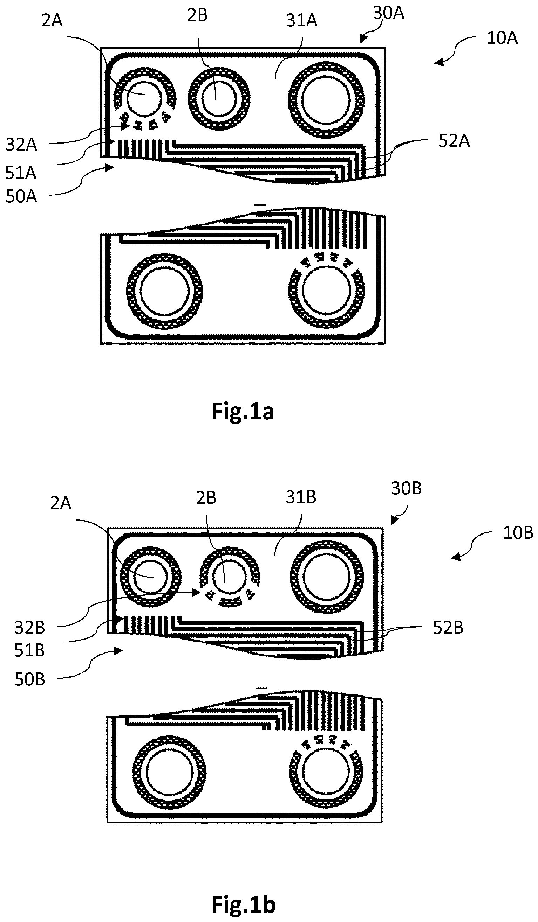

Les figures 1a et 1b illustrent une architecture d'empilement de cellules électrochimiques telle que décrite dans le document WO2012/152623 qui permet d'éviter une accumulation d'espèces non réactives dans les cellules. Pour cela, les cellules électrochimiques sont réparties en plusieurs groupes distincts de cellules, par exemple en deux groupes A et B tel que représenté ici, destinés à être alimentés sélectivement en une même espèce réactive, ici en hydrogène.

La figure la illustre la face anodique 31A d'une plaque bipolaire 30A d'une cellule 10A du groupe A et la figure 1b illustre la face anodique 31B d'une plaque bipolaire 30B d'une cellule 10B du groupe B. Les faces anodiques 31A, 31B des plaques bipolaires comportent chacune un circuit de distribution 50A, 50B, formé de canaux 52A, 52B disposés en parallèle les uns avec les autres, qui s'étend à partir d'une entrée 51A, 51B, en amont et à proximité de laquelle sont situés deux collecteurs d'alimentation 2A et 2B adaptés à assurer l'alimentation des cellules en hydrogène. Les collecteurs d'alimentation sont formés d'une ouverture traversant l'empilement de plaques bipolaires, et sont structurés au niveau de celles-ci de manière à autoriser l'écoulement de l'hydrogène vers le circuit de distribution de la cellule du groupe correspondant et à bloquer l'écoulement de l'hydrogène vers la cellule des autres groupes. Plus précisément, en référence à la figure 1a, le collecteur d'alimentation 2B est isolé fluidiquement du circuit de distribution 50A de la cellule 10A au moyen d'un joint étanche périphérique alors que le collecteur d'alimentation 2A comporte des conduits d'injection 32A autorisant l'écoulement d'hydrogène en direction du circuit de distribution 50A de la cellule 10A. De manière similaire, et en référence à la figure 1b, le collecteur d'alimentation 2A est isolé fluidiquement du circuit de distribution 50B de la cellule 10B au moyen d'un joint étanche périphérique alors que le collecteur d'alimentation 2B comporte des conduits d'injection 32B autorisant l'écoulement d'hydrogène en direction du circuit de distribution 50B de la cellule 10B.

En fonctionnement, les groupes A et B de cellules sont alimentés sélectivement en hydrogène de manière alternée. Cette alimentation sélective alternée entraîne un brassage des espèces non réactives d'un groupe de cellules à l'autre permettant d'éviter l'accumulation localisée de ces espèces dans un même groupe de cellules.

Cependant, cette architecture d'empilement de cellules électrochimiques où plusieurs collecteurs d'alimentation sont placés en amont et à proximité de l'entrée du circuit de distribution entraîne une inhomogénéité de l'écoulement dans les différents canaux de distribution. En effet, en référence à la figure 1a, les canaux 52A du circuit de distribution 50A sont alimentés de manière sensiblement homogène par le collecteur 2A dans la mesure où celui-ci est disposé sensiblement en regard de l'entrée 51A du circuit de distribution 50A. Au contraire, comme le montre la figure 1b, les canaux 52B du circuit de distribution 50B sont alimentés de manière inhomogène par le collecteur d'alimentation 2B dans la mesure où celui-ci est globalement déporté vis-à-vis de l'entrée 51B du circuit de distribution 50B. Ainsi, les canaux 52B proximaux vis-à-vis du collecteur 2B seront alimentés en hydrogène alors que les canaux 52B distaux présenteront un écoulement d'hydrogène plus faible. Le débit molaire en hydrogène ne sera donc pas homogène au sein des différents canaux du circuit de distribution, ce qui peut entraîner une dégradation des performances électrochimiques des cellules du groupe concerné. De plus, le déséquilibre de fonctionnement entre les différents groupes de cellules peut également induire une diminution des performances électrochimiques de la pile à combustible.

### EXPOSÉ DE L'INVENTION

L'invention a pour objectif de remédier au moins en partie aux inconvénients de l'art antérieur, et plus particulièrement de proposer un empilement de cellules électrochimiques réparties en plusieurs groupes de cellules distincts, chaque groupe de cellules comportant un collecteur d'alimentation adapté à amener une même espèce réactive vers un circuit de distribution des cellules du groupe considéré, dont l'architecture fluidique assure une homogénéisation de l'écoulement de cette espèce réactive dans le circuit de distribution d'au moins l'une des cellules électrochimiques.

L'invention propose à cet effet un empilement de cellules électrochimiques :
∘ lesdites cellules électrochimiques étant réparties en N groupes distincts de cellules, N≥2;
∘ chaque cellule électrochimique comportant un circuit de distribution adapté à distribuer une espèce réactive au niveau d'une électrode de la cellule ;
∘ chaque groupe de cellules comportant un collecteur d'alimentation distinct, disposé en amont d'une entrée du circuit de distribution de chaque cellule de l'empilement, et adapté à permettre l'écoulement de ladite espèce réactive vers ladite entrée du circuit de distribution des cellules dudit groupe et à bloquer l'écoulement de ladite espèce réactive vers les cellules des autres groupes.

Selon l'invention, au moins une première cellule parmi lesdites cellules électrochimiques comprend un compartiment d'homogénéisation comportant :
∘ une pluralité de conduits longitudinaux adaptés à recevoir l'écoulement de ladite espèce réactive provenant du collecteur d'alimentation du groupe correspondant, et à le répartir au niveau de l'entrée du circuit de distribution de la première cellule ; et
∘ un conduit transversal d'homogénéisation reliant fluidiquement les conduits longitudinaux les uns aux autres.

Certains aspects préférés mais non limitatifs de cet empilement de cellules électrochimiques sont les suivants :
De préférence, le conduit transversal du compartiment d'homogénéisation relie fluidiquement tous les conduits longitudinaux dudit compartiment. Le conduit transversal peut présenter une dimension longitudinale sensiblement égale à la largeur de l'entrée du réseau de distribution. Les conduits longitudinaux du compartiment peuvent être agencés, ou disposés, en regard de sensiblement toute la largeur de l'entrée du réseau de distribution.

De préférence, les collecteurs d'alimentation des groupes de cellules sont adjacents deux à deux, c'est-à-dire qu'ils sont disposés côte à côte. Ils alimentent les cellules en la même espèce réactive. Par exemple, un premier collecteur d'alimentation alimente un premier groupe de cellules en hydrogène, respectivement en oxygène, et un deuxième collecteur d'alimentation adjacent au premier alimente un deuxième groupe de cellules en hydrogène, respectivement en oxygène.

Les collecteurs d'alimentation des groupes de cellules peuvent être disposés en regard, c'est-à-dire en vis-à-vis, de l'entrée du réseau de distribution. Ainsi, l'entrée du réseau de distribution est suffisamment large pour être en regard desdits groupes d'alimentation des groupes de cellules en la même espèce réactive.

Lesdits conduits longitudinaux sont de préférence interposés entre lesdits collecteurs d'alimentation et l'entrée du circuit de distribution de la première cellule, et sont disposés sensiblement en regard desdits collecteurs d'une part et de ladite entrée d'autre part.

La taille moyenne transversale dudit conduit transversal du compartiment d'homogénéisation est de préférence supérieure à celle de chacun desdits conduits longitudinaux.

Les conduits longitudinaux et le conduit transversal du compartiment d'homogénéisation sont de préférence des organes tubulaires formés dans une première plaque bipolaire de la première cellule, les organes tubulaires débouchant au niveau d'une face principale de ladite première plaque orientée vers ladite électrode.

La plaque bipolaire est de préférence formée de deux parties assemblées l'une à l'autre, et comporte une première et une seconde ligne d'étanchéité assurant localement l'étanchéité entre les deux parties de la plaque, la première ligne s'étendant de manière continue autour du collecteur n'alimentant pas la cellule, et la seconde ligne s'étendant de manière continue autour des collecteurs et du compartiment d'homogénéisation.

Le circuit de distribution de la première cellule comporte de préférence une pluralité de canaux parallèles entre eux s'étendant à partir de ladite entrée, le nombre de conduits longitudinaux étant sensiblement supérieur ou égal au nombre de canaux, chaque conduit longitudinal débouchant de préférence sensiblement en regard d'un ou plusieurs canaux.

Le collecteur d'alimentation adapté à alimenter ladite première cellule comporte de préférence des conduits d'injection débouchant au niveau d'une face principale d'une première plaque bipolaire de la première cellule orientée vers ladite électrode, le nombre de conduits longitudinaux étant supérieur au nombre de conduits d'injection, chaque conduit longitudinal débouchant de préférence sensiblement en regard d'un ou plusieurs conduits d'injection.

Le ou les collecteurs d'alimentation adaptés à ne pas alimenter ladite première cellule comportent de préférence des conduits ne débouchant pas au niveau d'une face principale d'une première plaque bipolaire de la première cellule orientée vers ladite électrode, le nombre de conduits longitudinaux étant supérieur au nombre de conduits non débouchants, chaque conduit longitudinal débouchant sensiblement en regard d'un conduit non débouchant.

Le conduit transversal du compartiment d'homogénéisation s'étend de préférence de manière continue autour desdits collecteurs d'alimentation au niveau d'une première plaque bipolaire de la première cellule et est assemblé de manière étanche à une seconde plaque bipolaire de ladite cellule.

Le conduit transversal du compartiment d'homogénéisation présente de préférence une section droite transversale dont la taille moyenne augmente à partir d'une bordure de l'entrée du circuit de distribution.

Le collecteur d'alimentation adapté à alimenter ladite première cellule comporte de préférence des conduits d'injection débouchant au niveau d'une face principale d'une seconde plaque bipolaire de la première cellule, ladite face principale de ladite seconde plaque étant orientée vers une seconde électrode séparée de la première électrode de la première cellule par une membrane électrolytique, et communiquant avec les conduits longitudinaux du compartiment d'homogénéisation.

Entre les conduits d'injection de ladite seconde plaque bipolaire et les conduits longitudinaux, est de préférence interposée une membrane étanche comportant au moins un orifice traversant, celui-ci étant de préférence disposé en regard d'au moins un conduit longitudinal distal vis-à-vis des conduits d'injection de la seconde plaque bipolaire.

Ladite membrane étanche comporte de préférence une pluralité d'orifices traversants sensiblement répartis en regard des conduits longitudinaux du compartiment d'homogénéisation.

Entre les conduits d'injection de la seconde plaque bipolaire et les conduits longitudinaux, est de préférence interposée une couche d'un matériau poreux adaptée à assurer la diffusion de l'écoulement de l'espèce réactive en direction desdits conduits longitudinaux.

Chaque cellule électrochimique comporte de préférence un compartiment d'homogénéisation, lesdits compartiments étant superposés les uns aux autres, et de préférence identiques les uns aux autres.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels, outre les figures 1a et 1b déjà décrites précédemment :
la figure 2 est une vue éclatée et en perspective d'une partie d'un empilement de cellules électrochimiques selon un mode de réalisation ;
les figures 3a et 3b sont des représentations partielles et schématiques en vue de dessus de la face principale anodique d'une plaque bipolaire d'une cellule appartenant à un premier groupe de cellules (figure 3a) et de la face principale anodique d'une plaque bipolaire d'une cellule appartenant à un second groupe de cellules distinct du premier groupe (figure 3b) de l'empilement de cellules représenté sur la figure 2 ;
les figures 4a et 4b sont des vues en coupe et en perspective d'une cellule électrochimique selon les plans A-A et B-B représentés sur la figure 3a, respectivement ;
la figure 5 est une représentation partielle et schématique en vue de dessus de la face principale anodique d'une plaque bipolaire selon un autre mode de réalisation où le conduit transversal d'homogénéisation entoure continûment les collecteurs d'alimentation ;
la figure 6 est une représentation partielle et schématique en vue de dessus de la face principale anodique d'une plaque bipolaire selon un autre mode de réalisation où le conduit transversal d'homogénéisation présente une section transversale de taille variable ;
la figure 7 est une vue en coupe et en perspective d'une cellule électrochimique selon une variante du mode de réalisation illustré sur la figure 4a, où le collecteur d'alimentation comporte des conduits d'injection au niveau des deux plaques bipolaires de la cellule électrochimique destinés à alimenter l'anode de ladite cellule ;
la figure 8 est une vue en coupe et en perspective d'un empilement de cellules électrochimiques appartenant à des groupes de cellules distincts selon un autre mode de réalisation, comportant deux membranes étanches présentant une pluralité d'orifices traversants répartis uniformément au niveau de l'entrée du circuit de distribution correspondant.

### EXPOSÉ DÉTAILLÉ DE MODES DE RÉALISATION PARTICULIERS

Sur les figures et dans la suite de la description, les mêmes références représentent des éléments identiques ou similaires. De plus, les différents éléments ne sont pas représentés à l'échelle, de manière à privilégier la clarté des figures.

On décrira différents modes de réalisation et variantes en référence à un réacteur électrochimique comportant un empilement de cellules réparties en différents groupes de cellules distincts, les cellules étant destinées à être alimentées de manière sélective. On considérera en particulier le côté anode d'une pile à hydrogène, la pile étant ici alimentée en hydrogène côté anode et en oxygène côté cathode. L'invention s'applique cependant au côté cathode alimenté en oxygène. L'invention s'applique d'une manière générale à tout type de pile à combustible, en particulier à celles fonctionnant à basse température, c'est-à-dire à une température inférieure à 250°C, ainsi qu'aux électrolyseurs électrochimiques.

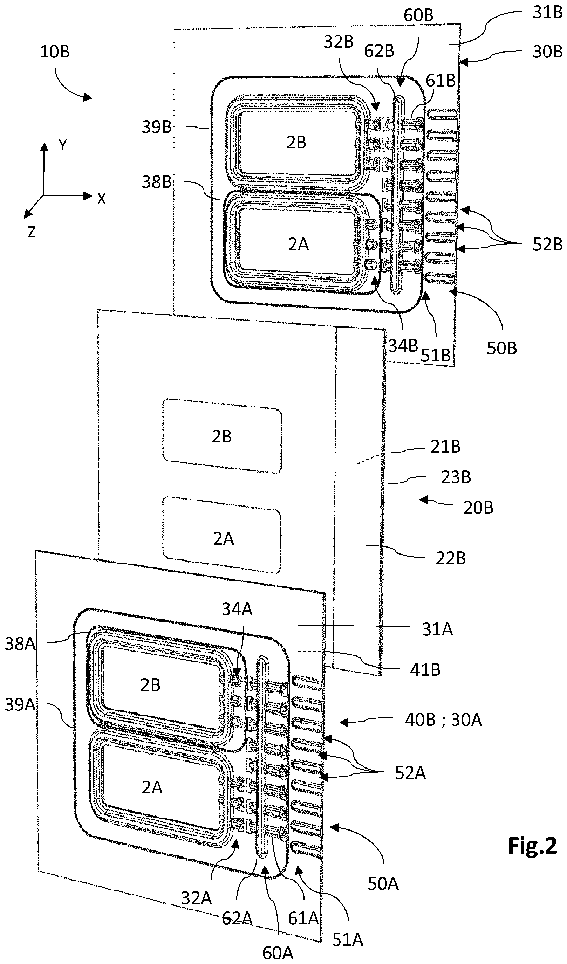

La figure 2 illustre une vue éclatée d'une partie d'un empilement de cellules électrochimiques d'une pile à hydrogène, les cellules étant réparties en N groupes de cellules distincts, avec N un entier naturel supérieur ou égal à 2. Ici, les cellules sont réparties en deux groupes A, B distincts et une cellule électrochimique appartenant au groupe B est représentée.

Les cellules sont de préférence identiques les unes aux autres. Les cellules des différents groupes du même empilement peuvent être disposées de manière imbriquée, de sorte qu'une cellule d'un groupe est adjacente à une cellule d'un autre groupe.

On définit ici et pour la suite de la description un repère orthonormé tridimensionnel, où les axes X et Y sont orientés suivant le plan principal des cellules et l'axe Z est orienté de manière sensiblement orthogonale au plan principal des cellules.

Les cellules comportent chacune une première électrode, ici l'anode, et une seconde électrode, la cathode, séparées l'une de l'autre par une membrane électrolytique, formant ainsi un assemblage membrane électrodes. L'anode, la membrane et la cathode sont des éléments classiques connus de l'homme du métier et ne sont donc pas décrites en détail. L'assemblage s'étend suivant un plan principal de la cellule sensiblement parallèle au plan (X,Y).

Chaque assemblage est séparé de celui des cellules adjacentes par des plaques bipolaires. Chaque plaque bipolaire comporte une première face principale, ou face anodique, destinée à être partiellement au contact de l'anode et une seconde face principale, ou face cathodique, opposée à la face anodique, destinée à être partiellement au contact de la cathode. Chaque plaque bipolaire est adaptée à amener les espèces réactives à l'anode d'une première cellule d'une part et à la cathode d'une cellule adjacente d'autre part, et à évacuer les produits issus des réactions électrochimiques et les espèces non réactives, ainsi qu'à transmettre le courant électrique entre les cellules. Elle peut également assurer l'écoulement d'un fluide caloporteur entre les cellules de manière à permettre l'évacuation de la chaleur produite.

L'empilement de cellules comporte ici 2 collecteurs d'alimentation 2A, 2B distincts, formés chacun d'une ouverture qui traverse l'empilement de cellules, et plus précisément qui traverse les plaques bipolaires 30B, 40B de la cellule 10B en regard d'une bordure de l'assemblage 20B membrane électrodes. Les collecteurs d'alimentation 2A, 2B sont destinés à assurer la circulation fluidique d'une même espèce réactive, ici l'hydrogène, en vue d'alimenter sélectivement l'anode des cellules des deux groupes A et B.

Une première plaque bipolaire 30B de la cellule 10B comporte ainsi deux ouvertures traversantes qui participent à former les collecteurs 2A et 2B. Le collecteur 2B comporte des conduits 32B, formés dans la plaque bipolaire 30B, qui d'une part communiquent avec l'ouverture traversante du collecteur 2B et d'autre part débouchent sur la face principale 31B, ou face anodique, de la plaque bipolaire 30B, cette face étant orientée vers l'anode 21B de la cellule 10B. Les conduits 32B forment ainsi des conduits d'injection, ou injecteurs, adaptés à permettre l'écoulement de l'hydrogène à partir du collecteur 2B en direction de la face anodique 31B de la plaque bipolaire. Le collecteur 2A comporte ici des conduits 34B, formés dans la plaque bipolaire, qui communiquent avec l'ouverture traversante du collecteur 2A mais ne débouchent pas sur la face anodique 31B de la plaque bipolaire. Ces conduits non débouchants 34B sont adaptés à bloquer l'écoulement de l'hydrogène circulant dans le collecteur 2A en direction de la face anodique 31B de la plaque bipolaire.

La plaque bipolaire 30B comporte un circuit de distribution 50B, formé dans la plaque bipolaire 30B, et adapté à assurer la distribution de l'hydrogène provenant du collecteur 2B au niveau de la face anodique 31B. Le circuit de distribution 50B est formé d'un réseau de canaux 52B de distribution parallèles entre eux, qui s'étendent à partir d'une entrée 51B du circuit, située en regard des collecteurs A et B, et plus précisément ici, en regard des conduits d'injection 32B du collecteur 2B et des conduits non débouchants 34B du collecteur 2A.

La plaque bipolaire 30B comporte en outre un compartiment d'homogénéisation 60B situé entre les conduits d'injection 32B du collecteur 2B et l'entrée 51B du circuit de distribution 50B. Ce compartiment d'homogénéisation 60B comprend une pluralité de conduits longitudinaux 61B de répartition de l'écoulement fluidique et au moins un conduit transversal 62B d'homogénéisation reliant fluidiquement les conduits longitudinaux 61B les uns aux autres. Les conduits longitudinaux 61B sont adaptés à recevoir l'écoulement d'hydrogène provenant du collecteur 2B et à répartir cet écoulement au niveau de l'entrée 51B du circuit de distribution 50B. Pour cela, les conduits longitudinaux 61B sont des conduits formés dans la plaque bipolaire 30B qui débouchent au niveau de la face anodique 31B, d'une part en regard des conduits d'injection 32B du collecteur 2B, et d'autre part en regard de l'entrée 51B du circuit de distribution 50B. Par répartir l'écoulement, on entend que tous les conduits longitudinaux 61B, à 10% près, distribuent une partie de l'écoulement provenant du collecteur 2B. Le conduit transversal 62B d'homogénéisation est un conduit formé dans la plaque bipolaire 30B qui relie les conduits longitudinaux 61B entre eux, de sorte que l'hydrogène entrant dans quelques conduits longitudinaux 61B s'écoule dans le conduit transversal 62B avant de ressortir au niveau d'approximativement tous les conduits longitudinaux 61B en direction du circuit de distribution 50B. Le conduit transversal 62B s'étend ici suivant un axe sensiblement orthogonal à l'axe suivant lequel s'étendent les conduits longitudinaux 61B. D'une manière plus générale, les axes suivant lesquels s'étendent respectivement les conduits longitudinaux et le conduit transversal forment un angle de préférence supérieur ou égal à 45°, ici sensiblement égal à 90°. Ainsi, le compartiment d'homogénéisation assure une répartition homogénéisée de l'écoulement d'hydrogène provenant du collecteur 2B, en direction de l'entrée 51B du circuit de distribution 50B.

De manière similaire, la seconde plaque bipolaire 40B comporte également deux ouvertures traversantes qui participent à former les collecteurs 2A et 2B. Elle comporte une face principale 41B, ou face cathodique, orientée vers la cathode 22B de la cellule 10B, et une face principale opposée, ou face anodique, orientée vers l'anode d'une cellule adjacente (non représentée) appartenant au groupe A. Ainsi, la seconde plaque bipolaire 40B de la cellule 10B correspond également à la première plaque bipolaire 30A de la cellule (non représentée) adjacente. Le collecteur 2A est ici adapté à alimenter en hydrogène l'anode de la cellule adjacente. Il comporte des conduits 32A, formés dans la plaque bipolaire 30A, qui d'une part communiquent avec l'ouverture traversante du collecteur 2A et d'autre part débouchent sur la face anodique 31A de la plaque bipolaire 30A. Ils forment ainsi des conduits d'injection 32A, ou injecteurs, adaptés à permettre l'écoulement de l'hydrogène à partir du collecteur 2A en direction de la face anodique 31A de la plaque bipolaire 30A. Le collecteur 2B comporte ici des conduits 34A, formés dans la plaque bipolaire 30A, qui communiquent avec l'ouverture traversante du collecteur 2B mais ne débouchent pas sur la face anodique 31A de la plaque bipolaire 30A. Ces conduits non débouchants 34A sont adaptés à bloquer l'écoulement de l'hydrogène circulant dans le collecteur 2B en direction de la face anodique 31A de la plaque bipolaire 30A.

La plaque bipolaire 30A comporte un circuit de distribution 50A, formé dans la plaque bipolaire 30A, et adapté à assurer la distribution de l'hydrogène provenant du collecteur 2A au niveau de sa face anodique 31A. Le circuit de distribution 50A est formé d'un réseau de canaux de distribution 52A parallèles entre eux, qui s'étendent à partir d'une entrée 51A du circuit, située en regard des collecteurs A et B, et plus précisément ici en regard des conduits d'injection 32A du collecteur 2A et des conduits non débouchants 34A du collecteur 2B. Le circuit de distribution 50A de la plaque bipolaire 30A est ici structurellement identique à celui de la plaque bipolaire 30B, les entrées 51A et 51B ainsi que les canaux 52A et 52B étant respectivement superposés les uns aux autres suivant la direction Z.

De manière similaire, la plaque bipolaire 30A comporte en outre un compartiment d'homogénéisation 60A situé entre les conduits d'injection 32A du collecteur 2A et l'entrée 51A du circuit de distribution 50A. Ce compartiment d'homogénéisation 60A comprend une pluralité de conduits longitudinaux 61A de répartition de l'écoulement fluidique et au moins un conduit transversal 62A d'homogénéisation reliant fluidiquement les conduits longitudinaux 61A les uns aux autres. Les conduits longitudinaux 61A sont adaptés à recevoir l'écoulement d'hydrogène provenant du collecteur 2A et à répartir cet écoulement au niveau de l'entrée 51A du circuit de distribution 50A. Pour cela, les conduits longitudinaux 61A sont des conduits formés dans la plaque bipolaire 30A qui débouchent au niveau de la face anodique 31A, d'une part en regard des conduits d'injection 32A du collecteur 2A, et d'autre part en regard de l'entrée 51A du circuit de distribution 50A. Le conduit transversal 62A d'homogénéisation est un conduit formé dans la plaque bipolaire 30A qui relie les conduits longitudinaux 61A entre eux, de sorte que l'hydrogène entrant dans quelques conduits longitudinaux s'écoule dans le conduit transversal 62A avant de ressortir au niveau d'approximativement tous les conduits longitudinaux 61A en direction du circuit de distribution 50A. Ainsi, le compartiment d'homogénéisation assure une répartition homogénéisée de l'écoulement d'hydrogène provenant du collecteur 2A, au niveau de l'entrée 51A du circuit de distribution 50A. Le compartiment d'homogénéisation 60A de la plaque bipolaire 30A est ici, de manière préférentielle, structurellement identique à celui de la plaque bipolaire 30B, les conduits longitudinaux 61A et 61B ainsi que les conduits transversaux 62A et 62B étant respectivement superposés les uns aux autres suivant la direction Z.

Lorsque les plaques bipolaires 30B, 40B sont formées de deux parties assemblées l'une à l'autre, par exemple de deux tôles électriquement conductrices où les différents conduits correspondent à des bossages réalisés par emboutissage, ou de deux parties en matériau composite chargé par exemple de graphite où les bossages formant les différents conduits sont réalisés par moulage, elles comportent chacune, de manière avantageuse, deux lignes d'étanchéité disposées de manière à éviter l'écoulement du fluide d'alimentation entre les deux parties de plaque ailleurs que dans des zones prédéfinies.

Ainsi, la plaque bipolaire 30B comporte une première ligne d'étanchéité 38B, dite interne, disposée de manière à éviter que le fluide d'alimentation circulant dans le collecteur non destiné à alimenter la cellule, ne s'écoule entre les deux parties de la plaque bipolaire. La ligne d'étanchéité interne 38B entoure ici le collecteur 2A non alimentant la cellule 10B, plus précisément l'ouverture traversante et les conduits non débouchants 34B du collecteur 2A. Elle s'étend de manière continue entre le collecteur 2A d'une part et le collecteur 2B et le compartiment d'homogénéisation 60B d'autre part, et assure donc localement l'étanchéité entre les deux parties formant la plaque bipolaire 30B, ce qui permet d'éviter que le fluide d'alimentation circulant dans le collecteur 2A ne s'écoule entre les deux parties de plaque 30B de la cellule 10B ailleurs que dans la zone délimitée par la ligne interne 38B.

De manière avantageuse, la plaque bipolaire 30B comporte ici une seconde ligne d'étanchéité 39B, dite externe, disposée de manière à éviter que le fluide d'alimentation traversant le compartiment d'homogénéisation 60B ne s'écoule entre les deux parties de la plaque bipolaire dans des zones non prévues, par exemple dans la zone prévue pour être le circuit de refroidissement. Elle entoure ici de manière continue les collecteurs 2A et 2B ainsi que le compartiment d'homogénéisation 60B et s'étend notamment entre le compartiment 60B et l'entrée 51B du circuit de distribution 50B. Elle assure localement l'étanchéité entre les deux parties formant la plaque bipolaire 30B, et permet ainsi d'éviter que le fluide d'alimentation traversant le compartiment d'homogénéisation 60B ne s'écoule ensuite entre les deux parties de plaque 30B de la cellule 10B ailleurs que dans la zone délimitée par la ligne externe 39B, c'est-à-dire par exemple dans le circuit de refroidissement.

De manière similaire, la plaque bipolaire 30A (également référencée 40B sur la figure 2) comporte une première ligne d'étanchéité interne 38A qui entoure de manière continue le collecteur 2B, et une seconde ligne d'étanchéité 39A qui entoure de manière continue les collecteurs 2A et 2B ainsi que le compartiment d'homogénéisation 60A.

Les lignes d'étanchéité peuvent être réalisées par tout moyen adapté à assurer localement l'étanchéité entre les deux parties de plaques, par exemple par soudure, brasure, voire par collage.

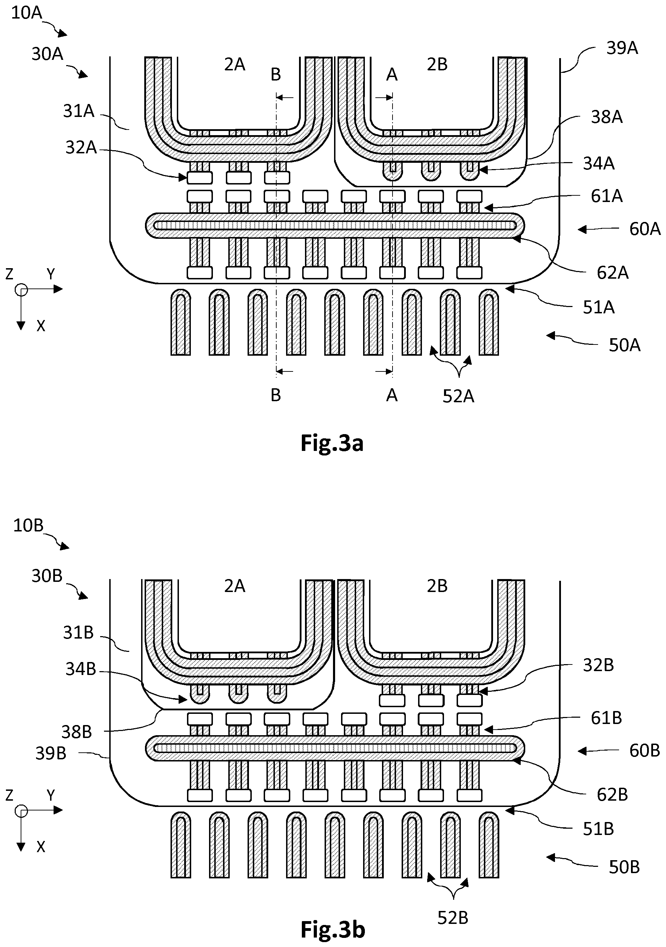

La figure 3a et 3b illustrent respectivement des vues de dessus des faces anodiques 31A, 31B des plaques bipolaires 30A, 30B représentées sur la figure 2.

En référence à la figure 3a, les collecteurs d'alimentation 2A et 2B traversent l'empilement de cellules électrochimiques, et plus particulièrement la plaque bipolaire 30A de la cellule 10A, et sont disposés en amont de l'entrée 51A du circuit de distribution 50A.

Le collecteur d'alimentation 2A est adapté à alimenter l'anode de la cellule 10A en hydrogène dans la mesure où la cellule 10A appartient au groupe A de cellules destinées à être alimentées par le collecteur 2A. Il comporte pour cela des conduits d'injection 32A débouchant au niveau de la face anodique 31A de la plaque bipolaire 30A. Sur la figure, trois conduits d'injection sont représentés, qui s'étendent longitudinalement suivant la direction X de manière rectiligne, mais d'autres formes longitudinales peuvent être prévues.

Le collecteur d'alimentation 2B est adapté à ne pas alimenter l'anode de la cellule 10A en hydrogène circulant dans ce collecteur, dans la mesure où la cellule 10A n'appartient pas au groupe B de cellules destinées à être alimentées par le collecteur 2B. Il comporte ici des conduits 34A ne débouchant pas au niveau de la face anodique 31A de la plaque bipolaire 30A. Sur la figure, trois conduits d'injection sont représentés, qui s'étendent longitudinalement suivant la direction X de manière rectiligne, mais d'autres formes longitudinales peuvent être prévues. Il est entouré d'une ligne d'étanchéité interne 38A.

Comme décrit précédemment, la plaque bipolaire 30A comporte un circuit de distribution 50A formé d'un réseau de canaux 52A adaptés à assurer la distribution de l'hydrogène provenant du collecteur d'alimentation 2A au niveau de l'anode de la cellule 10A. Le circuit de distribution 50A comporte une entrée 51A située à proximité et en regard des collecteurs d'alimentation 2A et 2B. L'entrée 51A du circuit de distribution 50A présente ici une largeur, c'est-à-dire une dimension ici suivant l'axe Y, supérieure à la largeur d'injection du collecteur 2A. La largeur du circuit de distribution est définie comme la distance séparant les deux canaux les plus éloignés l'un de l'autre, et la largeur d'injection d'un collecteur est définie comme la distance séparant les deux conduits d'injection les plus éloignés l'un de l'autre. Dans l'exemple de la figure 3a, l'entrée 51A du circuit de distribution 51A est en regard à la fois des conduits d'injection 32A du collecteur 2A et des conduits non débouchants 34A du collecteur 2B. L'entrée 51A du circuit de distribution 50A présente ici une largeur approximativement égale, à 10% près, à la somme de la largeur d'injection du collecteur 2A et de la largeur des conduits non débouchants du collecteur 2B.

Comme décrit précédemment, la plaque bipolaire 30A comporte également un compartiment d'homogénéisation 60A situé entre les conduits d'injection 32A du collecteur 2A et l'entrée 51A du circuit de distribution 50A. Le compartiment d'homogénéisation 60A comporte une pluralité de conduits longitudinaux 61A de répartition reliés les uns aux autres par au moins un conduit transversal 62A d'homogénéisation. Les conduits longitudinaux 61A comportent une entrée orientée du côté des collecteurs 2A et 2B vis-à-vis du conduit transversal 62A, et une sortie orientée du côté du circuit de distribution 50A vis-à-vis du conduit transversal 62A. Les conduits longitudinaux 61A et le conduit transversal 62A sont formés dans la plaque bipolaire 30A, et les entrées et sorties des conduits longitudinaux 61A débouchent au niveau de la face anodique 31A. Une ligne d'étanchéité externe 39A entoure le compartiment d'homogénéisation 60A et les collecteurs 2A et 2B.

Dans cet exemple et, de manière avantageuse, le compartiment d'homogénéisation 60A est disposé à la fois entre les conduits d'injection 32A du collecteur 2A et les conduits non débouchant 34A du collecteur 2B d'une part, et l'entrée 51A du circuit de distribution 50A d'autre part. Il comporte ici un nombre de conduits longitudinaux 61A approximativement égal, à 10% près, ou supérieur au nombre de canaux 52A du circuit de distribution 50A, et chaque conduit longitudinal 61A débouche sensiblement en regard d'un ou plusieurs canaux 52A. Ainsi, le compartiment d'homogénéisation assure la répartition de l'écoulement d'hydrogène provenant du collecteur 2A qui ressort des conduits longitudinaux 61A sensiblement en regard de l'entrée des canaux 52A. L'écoulement d'hydrogène provenant du collecteur 2A est réparti sur sensiblement toute l'entrée du circuit, de sorte que sensiblement tous les canaux de distribution sont alimentés en hydrogène. De plus, la réduction des pertes de charge locales à l'entrée du circuit de distribution, par un alignement local entre les conduits longitudinaux 61A et les canaux 52A, peut permettre d'améliorer l'écoulement d'hydrogène à l'entrée du circuit de distribution.

Dans cet exemple et, de manière avantageuse, le nombre de conduits longitudinaux 61A est supérieur à celui des conduits d'injection 32A du collecteur 2A, et chaque conduit longitudinal 61A peut déboucher en regard d'un ou plusieurs conduits d'injection 32A, c'est-à-dire que l'entrée des conduits 61A est chacune sensiblement en regard de la sortie d'un ou plusieurs injecteurs 32A. Cela peut se traduire par un alignement des axes longitudinaux des injecteurs 32A et des conduits longitudinaux 61A, ici sensiblement confondus avec l'axe X. Ainsi, le compartiment d'homogénéisation assure une collecte de l'hydrogène provenant du collecteur d'alimentation 2A par l'intermédiaire des conduits d'injection 32A, où la réduction des pertes de charge locales entre les conduits d'injection 32A et les conduits longitudinaux 61A permet d'améliorer l'écoulement d'hydrogène.

Dans cet exemple et, de manière avantageuse, le nombre de conduits longitudinaux 61A est supérieur à celui des conduits non débouchants 34A du collecteur 2B, et chaque conduit non débouchant 34A s'étend sensiblement en regard d'un conduit longitudinal 61A, c'est-à-dire que l'axe longitudinal du conduit non débouchant 34A est sensiblement aligné avec celui d'un conduit longitudinal 61A.

Il est également avantageux que la section droite transversale du conduit transversal 62A, ici suivant un plan de coupe parallèle au plan (X,Z), soit supérieure, par exemple deux fois supérieure, à la section transversale de chacun des conduits longitudinaux 61A, ici suivant un plan de coupe parallèle au plan (Y,Z), de manière à favoriser l'homogénéisation de l'écoulement d'hydrogène dans le conduit transversal 62A, et ainsi de permettre une homogénéisation de la répartition de l'écoulement en entrée du circuit de distribution. Le débit molaire en hydrogène dans les différents canaux 52A du circuit de distribution 50A est ainsi davantage homogénéisé.

En référence à la figure 3b, la plaque bipolaire 30B de la cellule 10B est similaire à la plaque bipolaire 30A précédemment décrite, et en diffère essentiellement en ce que le collecteur d'alimentation 2B est adapté à alimenter l'anode de la cellule 10B en hydrogène alors que le collecteur d'alimentation 2A est adapté à ne pas alimenter l'anode de la cellule 10B. Pour cela, le collecteur 2B comporte des conduits d'injection 32B débouchant au niveau de la face anodique 31B de la plaque bipolaire 30B, et le collecteur 2A comporte ici des conduits non débouchants au niveau de la même face anodique 31B. Le circuit de distribution 50B et le compartiment d'homogénéisation 60B sont de préférence identiques à ceux décrits en référence à la figure 3a. Une ligne d'étanchéité interne 38B entoure le collecteur 2A et une ligne d'étanchéité externe 39B entoure les collecteurs 2A, 2B et le compartiment d'homogénéisation 60B.

Ainsi, comme le montrent les figures 3a et 3b, chaque cellule électrochimique comporte un compartiment d'homogénéisation disposé de manière à ce que les compartiments 60A, 60B soient superposés les uns aux autres. De manière avantageuse, ils sont structurellement identiques les uns aux autres, pour toutes les cellules de l'empilement, quel que soit le groupe auquel elles appartiennent. Ainsi, la réalisation des plaques des différentes cellules est simplifiée dans la mesure où elles diffèrent les unes des autres essentiellement par la présence ou non d'ouvertures à l'extrémité des conduits 32A, 34A ; 32B, 34B de manière à former des conduits d'injection 32A, 32B ou des conduits non débouchants 34A, 34B. Chaque cellule bénéficie ainsi d'une répartition homogénéisée de l'écoulement d'hydrogène en entrée du circuit de distribution, sans avoir à alourdir la réalisation des plaques des différentes cellules de l'empilement.

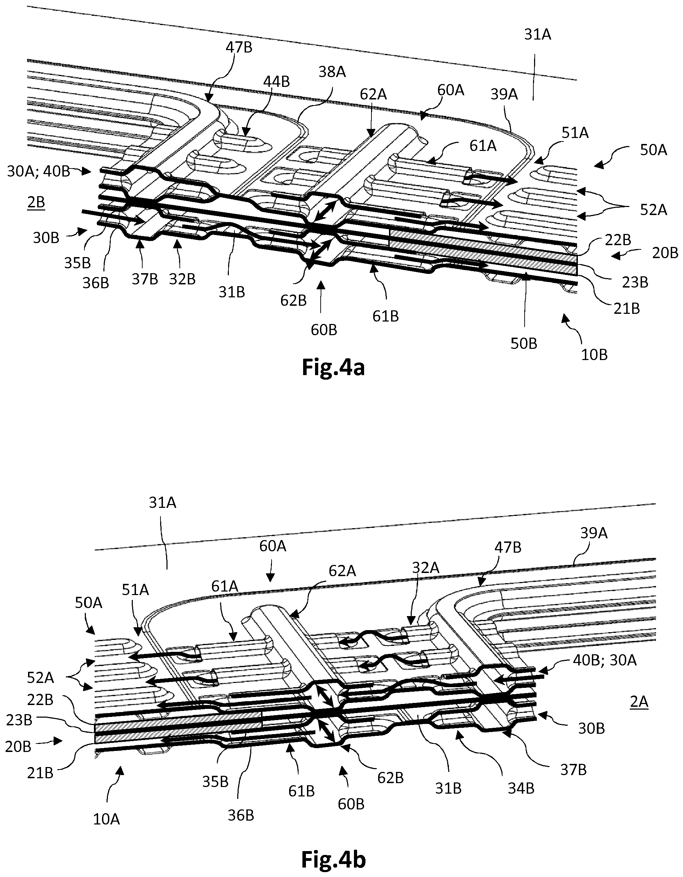

Les figures 4a et 4b illustrent des vues en coupe et en perspective d'une partie de l'empilement de cellules électrochimiques selon les plans A-A et B-B représenté sur la figure 3a. Plus précisément, une cellule 10B du groupe B est illustrée ici, qui comporte un assemblage membrane électrodes 20B formée d'une anode 21B et d'une cathode 22B séparée l'une de l'autre par une membrane électrolytique 23B. L'assemblage 20B est situé entre deux plaques bipolaires 30B et 40B.

Les plaques bipolaires 30B, 40B sont ici formées chacune d'un assemblage de deux tôles métalliques embouties mais elles pourraient être formées de deux parties en matériau composite chargé par exemple de graphite. Les deux tôles métalliques forment respectivement une tôle anodique et une tôle cathodique, dans la mesure où les tôles comportent une face principale destinée à être au contact d'une partie de l'anode ou de la cathode d'une cellule.

En référence à la figure 4a, la plaque bipolaire 30B est structurée de manière à permettre l'écoulement d'hydrogène à partir du collecteur 2B vers le circuit de distribution 50B de la cellule 10B. Pour cela, les conduits d'injection 32B sont ici des organes tubulaires formés dans la plaque bipolaire 30B débouchant au niveau de la face anodique 31B de la plaque 30B. Par organe tubulaire, on entend un organe dont la section transversale, ici suivant un plan parallèle au plan (Y,Z), présente un profil fermé permettant de contenir l'espèce réactive dans l'organe tubulaire et à assurer son écoulement suivant l'axe longitudinal. Ces organes tubulaires sont formés par des bossages réalisés dans la tôle anodique 35B et dans la tôle cathodique 36B, en saillie par rapport au plan principal de la plaque bipolaire 30B, celui-ci étant sensiblement parallèle au plan (X,Y). Les organes tubulaires 32B débouchent sur le collecteur 2B d'une part et sur la face anodique 31B d'autre part. Les ouvertures des conduits d'injection 32B au niveau de la face anodique 31B sont obtenues par exemple par une découpe localisée dans la tôle anodique 35B.

Le circuit de distribution 50B est formé dans la plaque bipolaire 30B par des bossages réalisés au niveau de la tôle anodique 35B, définissant un réseau de canaux de distribution.

Les canaux de distribution ne forment pas des organes tubulaires, c'est-à-dire que la section transversale des canaux suivant un plan parallèle au plan (Y,Z) ne présente pas un profil fermé mais un profil ouvert. En effet, le profil transversal des canaux est ouvert en direction de l'anode 21B de manière à assurer la diffusion de l'hydrogène vers celle-ci et à permettre la collecte des produits issus de la réaction électrochimique.

Le compartiment d'homogénéisation 60B, et plus précisément les conduits longitudinaux 61B et le conduit transversal 62B, sont des organes tubulaires formés dans la plaque bipolaire 30B et débouchants au niveau de la face anodique 31B. Ces organes tubulaires sont des bossages réalisés au niveau des tôles anodique 35B et cathodique 36B de la plaque bipolaire 30B. Les ouvertures des conduits longitudinaux 61B au niveau de la face anodique 31B sont réalisées par exemple par une découpe localisée dans la tôle anodique 35B.

Ces bossages peuvent être réalisés par emboutissage lorsque la plaque bipolaire est formée de deux tôles métalliques, ou être réalisés par moulage lorsque la plaque bipolaire est formée de deux parties en matériau composite.

La plaque bipolaire 40B est similaire à la plaque 30B, et en diffère essentiellement en ce que les conduits 44B au niveau du collecteur 2B, superposés aux conduits d'injection 32B, sont ici non débouchants. Par ailleurs, le compartiment d'homogénéisation 60A et le circuit de distribution 50A sont sensiblement identiques à ceux de la plaque bipolaire 30B. Ils sont cependant alimentés à partir de conduits d'injection (non représentés), formés dans la plaque bipolaire 40B et communiquant avec le collecteur d'alimentation 2A.

Par ailleurs, dans cet exemple, la membrane, ou film polymère, formant la membrane électrolytique 23B dans la zone active, s'étend également à partir de l'assemblage 20B jusqu'au collecteur 2B. Elle est ici au contact de conduits transversaux 37A et 47B entourant le collecteur 2B d'une part, et des conduits transversaux 62A et 62B des compartiments d'homogénéisation 60A et 60B d'autre part, ce qui contribue à améliorer localement l'étanchéité.

En référence à la figure 4b, les plaques bipolaires 30B et 40B diffèrent essentiellement de la partie décrite en référence à la figure 4a en ce que le collecteur 2A comporte des conduits 34B non débouchants formés dans la plaque bipolaire 30B, et comporte des conduits d'injection 32B formés dans la plaque bipolaire 40B (également référencée 30A) et débouchant au niveau de la face anodique 31A.

En fonctionnement, l'hydrogène circulant dans le collecteur 2B traverse les conduits d'injection 32B de la plaque 30B puis entre dans les conduits longitudinaux 61B situés en regard de ceux-ci. L'hydrogène circule également dans le conduit transversal 62B de sorte que l'écoulement d'hydrogène est homogénéisé puis réparti dans sensiblement tous les conduits longitudinaux 61B. L'écoulement d'hydrogène sort ensuite de chacun des conduits longitudinaux 61B en regard de l'entrée du circuit de distribution 50B et s'écoule dans chacun des canaux. L'hydrogène circulant dans le compartiment d'homogénéisation 60B ne provient pas ici des conduits 44B de la plaque 40B dans la mesure où ces conduits sont non débouchants. Par ailleurs, l'hydrogène circulant dans le collecteur 2A traverse les conduits d'injection 32A de la plaque 30A (également référencée 40B) puis entre dans les conduits longitudinaux 61A situés en regard de ceux-ci. L'hydrogène circule également dans le conduit transversal 62A de sorte que l'écoulement d'hydrogène est homogénéisé puis réparti dans sensiblement tous les conduits longitudinaux 61A. L'écoulement d'hydrogène sort ensuite de chacun des conduits longitudinaux 61A en regard de l'entrée 51A du circuit de distribution 50A et s'écoule dans chacun des canaux 52A. Les compartiments d'homogénéisation assurent ainsi la répartition homogénéisée de l'écoulement d'hydrogène provenant des collecteurs d'alimentation au niveau de l'entrée des circuits de distribution. Le débit molaire d'hydrogène dans les différents canaux de distribution est alors sensiblement homogène. De plus, le fait que les compartiments d'homogénéisation et les circuits de distribution soient respectivement superposés et identiques les uns avec les autres rend le procédé de fabrication de l'empilement de cellules relativement simple à réaliser.

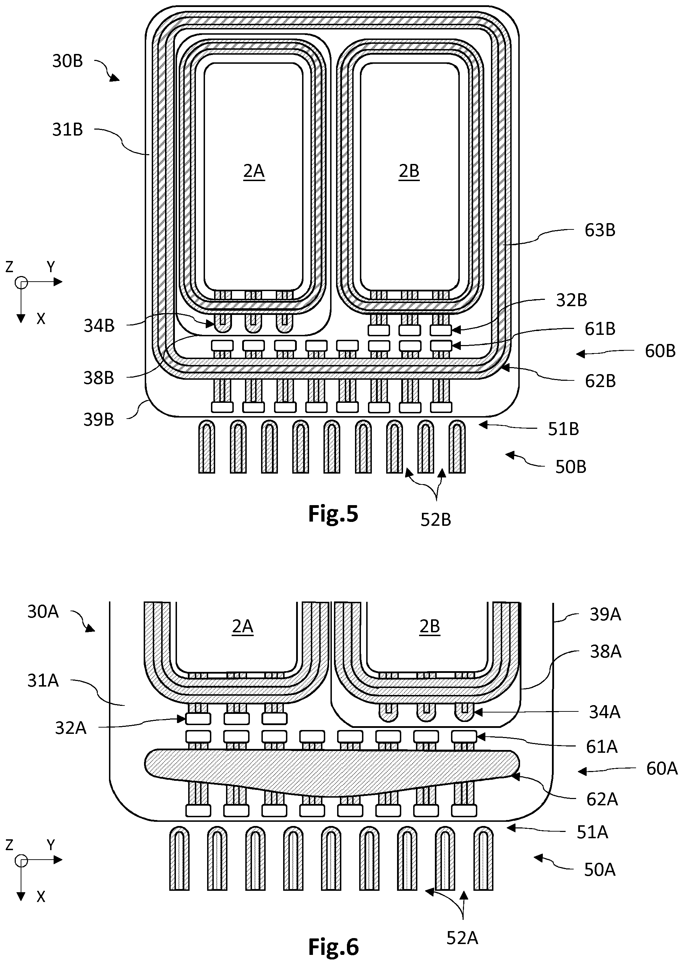

La figure 5 illustre une vue de dessus de la face anodique 31B de la plaque bipolaire 30B selon une variante du mode de réalisation représenté sur la figure 3b. Cette variante diffère du mode de réalisation de la figure 3b essentiellement en ce qu'un joint étanche périphérique 63B s'étend de manière continue autour des deux collecteurs 2A et 2B, et est disposé entre ces derniers et le circuit de distribution 50B.

Dans cet exemple, les conduits transversaux 62A, 62B des compartiments d'homogénéisation 60A, 60B des deux plaques bipolaires 30B, 40B de la cellule 10B s'étendent de manière continue autour des deux collecteurs 2A, 2B, et le joint périphérique 63B est au contact des deux conduits transversaux 62A, 62B de manière étanche (seul le conduit transversal 62B est représenté sur la figure 5). Ainsi, une étanchéité est réalisée localement entre les deux plaques bipolaires 30B, 40B par le joint périphérique 63B.

L'hydrogène sortant des conduits d'injection 32B du collecteur 2B ne peut rejoindre le circuit de distribution 50B sans traverser au préalable le compartiment d'homogénéisation 60B. Cette étanchéité oblige donc l'hydrogène sortant des conduits d'injection 30B à s'introduire dans une partie des conduits longitudinaux 61B du compartiment d'homogénéisation 60B avant d'être réparti à l'entrée 51B du circuit de distribution 50B. Tout contournement par l'hydrogène du compartiment d'homogénéisation 60B est ainsi impossible, ce qui améliore la répartition homogénéisée de l'écoulement d'hydrogène en entrée 51B du circuit de distribution 50B.

La figure 6 illustre une vue de dessus de la face anodique 31A de la plaque bipolaire 30A selon une variante du mode de réalisation représenté sur la figure 3a. Cette variante diffère essentiellement du mode de réalisation de la figure 3a en ce que le conduit transversal 62A d'homogénéisation présente une section transversale de taille variable. Plus précisément, la dimension moyenne de la section droite transversale du conduit d'homogénéisation, ici dans un plan parallèle au plan (X,Z), augmente à partir d'une bordure de l'entrée du circuit de distribution 50A, à mesure que l'on s'éloigne des conduits d'injection 32A du collecteur 2A. Dans cet exemple, la section transversale du conduit d'homogénéisation 62A augmente de manière constante à mesure que l'on s'éloigne du collecteur 2A, jusqu'à une position centrale du conduit d'homogénéisation 62A situé sensiblement entre les deux collecteurs 2A et 2B. Bien entendu, toute autre loi de croissance de la taille moyenne de la section droite transversale du conduit d'homogénéisation est possible.

Dans la mesure où ce conduit d'homogénéisation 62B peut être identique pour tous les groupes de cellules, la section transversale présente avantageusement une forme en V, de sorte que la taille de la section augmente lorsqu'on s'éloigne des conduits d'injection, quel que soit le collecteur considéré. La taille moyenne de la section droite transversale du conduit d'homogénéisation est alors maximale au niveau de la position centrale du conduit d'homogénéisation 62A situé sensiblement entre les deux collecteurs 2A et 2B. Ainsi, l'hydrogène provenant du collecteur 2A est introduit par les conduits longitudinaux 61A du compartiment d'homogénéisation 60A et s'écoule dans le conduit transversal 62A d'homogénéisation dans la direction de l'augmentation de la taille transversale de ce conduit, ici dans la direction +Y. Dans l'exemple non représenté d'une injection d'hydrogène par le collecteur 2B, l'hydrogène est introduit dans le conduit transversal d'homogénéisation puis s'écoule dans ce dernier dans la direction -Y correspondant à la direction d'augmentation de la taille moyenne transversale du conduit d'homogénéisation. Ainsi, une meilleure homogénéisation de l'écoulement est assurée par cette augmentation de la section du canal transversal. De plus, l'homogénéisation de la répartition de l'écoulement d'hydrogène en entrée des circuits de distribution des cellules des différents groupes est améliorée par cette augmentation locale de la section transversale du conduit transversal des compartiments d'homogénéisation.

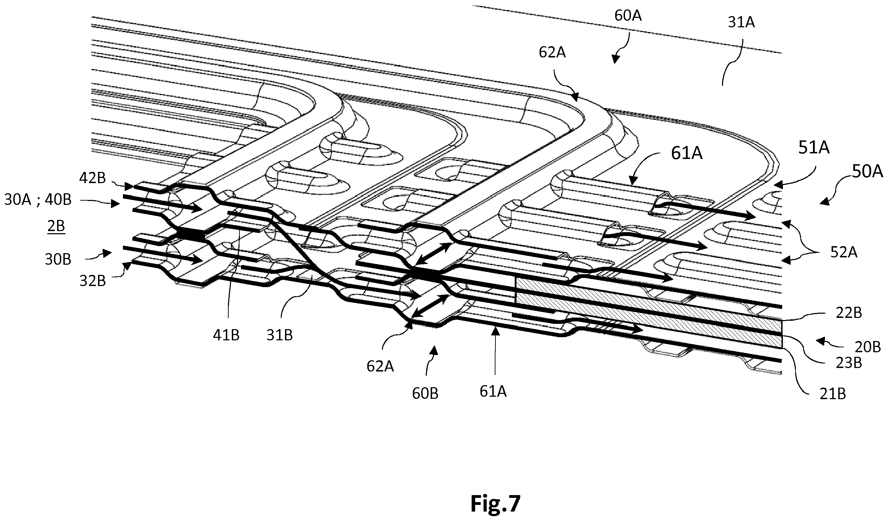

La figure 7 illustre une vue en coupe et en perspective d'une partie de l'empilement de cellules électrochimiques selon une variante du mode de réalisation représentée sur la figure 5. Cette variante diffère du mode de réalisation de la figure 5 essentiellement en ce que la membrane électrolytique 23B ne s'étend pas entre les compartiments d'homogénéisation 60A, 60B d'une part et les collecteurs d'alimentation 2A, 2B d'autre part.

Ainsi, l'hydrogène provenant du collecteur 2B et sortant des conduits d'injection 32B de la plaque bipolaire 30B peut s'écouler dans l'espace délimité entre les plaques bipolaires 30B et 40B situé entre les conduits d'injection 32B et l'entrée des conduits longitudinaux 61B d'homogénéisation. Cet espace forme une chambre d'homogénéisation située en amont du compartiment d'homogénéisation 60B, qui contribue à améliorer l'homogénéisation de l'écoulement.

De plus, dans cet exemple, la plaque bipolaire 40B comportent des conduits 42B qui ne débouchent pas au niveau de la face anodique 31A de la plaque bipolaire 40B (également référencée 30A en relation avec une cellule adjacente 10A non représentée), mais débouchent au niveau de la face cathodique 41B en amont des conduits longitudinaux 61B. Ces conduits 42B sont superposés aux conduits d'injection 32B de la plaque 30B. Ainsi, l'hydrogène circulant dans le collecteur 2B s'introduit dans les conduits d'injection 32B de la plaque bipolaire 30B et s'introduit également dans les conduits 42B de la plaque bipolaire 40B, puis ressortent de ceux-ci au niveau de la face anodique 31B de la plaque 30B et au niveau de la face cathodique 41B de la plaque 40B, respectivement. Ainsi, l'hydrogène entrant dans les conduits longitudinaux 61B d'homogénéisation proviennent à la fois des injecteurs 32B de la plaque bipolaire 30B et des injecteurs 42B de la plaque bipolaire 40B. L'homogénéisation de l'écoulement d'hydrogène dans le circuit de distribution 50B est alors améliorée.

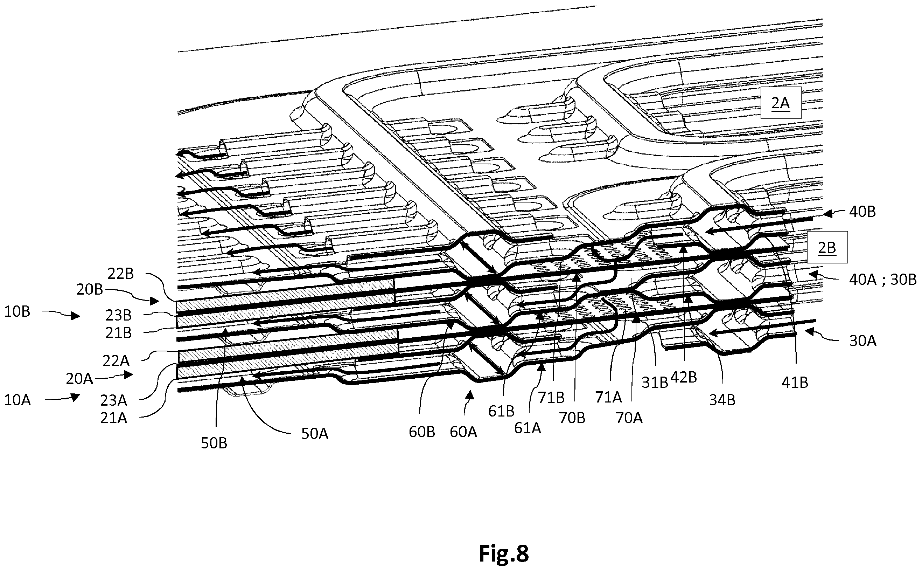

La figure 8 illustre une vue en coupe et en perspective d'un autre mode de réalisation de l'empilement de cellules, suivant un plan parallèle au plan (X,Z) passant par le collecteur 2B. L'empilement de cellules est similaire à celui représenté en figure 7.

La figure représente un empilement d'une cellule 10A et d'une cellule 10B. La cellule 10A comporte un assemblage 20A d'une anode 21A et d'une cathode 22A séparée l'une de l'autre par une membrane électrolytique 23A, disposé entre une plaque bipolaire 30A assurant l'alimentation fluidique de l'anode 21A et une plaque bipolaire 40A assurant l'alimentation fluidique de la cathode 22A. De manière similaire, la cellule 10B comporte un assemblage 20B d'une anode 21B et d'une cathode 22B séparée l'une de l'autre par une membrane électrolytique 23B, disposé entre une plaque bipolaire 30B assurant l'alimentation fluidique de l'anode 21B et une plaque bipolaire 40B assurant l'alimentation fluidique de la cathode 22A. La plaque bipolaire située entre les deux cellules 10A et 10B est référencée 40A en relation avec la cellule 10A et 30B en relation avec la cellule 10B.

Chaque cellule 10A et 10B comporte une membrane étanche 70A, 70B munie d'orifices traversants situées chacune entre les collecteurs 2A, 2B d'une part et les compartiments d'homogénéisation 60A, 60B d'autre part. Ces membranes s'étendent suivant un plan parallèle au plan principal des cellules, et peuvent être identiques, voire correspondre à la membrane électrolytique 23A, 23B. Les orifices traversants sont ici répartis uniformément en regard des conduits longitudinaux 61A, 61B, respectivement.

Le compartiment d'homogénéisation 60B de la plaque bipolaire 30B de la cellule 10B est alimenté en hydrogène à partir de conduits d'injection 42B formés dans la plaque bipolaire 40B communiquant avec le collecteur d'alimentation 2B et débouchant au niveau de la face cathodique 41B de la plaque. La plaque bipolaire 30B comporte ici des conduits 34B communiquant avec le collecteur 2B mais non débouchants au niveau de la face anodique 31B de celle-ci. Ainsi, les conduits non débouchants 34B ne participent pas à l'alimentation fluidique du circuit de distribution 50B. L'hydrogène alimentant les conduits longitudinaux 61B du compartiment d'homogénéisation 60B provient donc des conduits d'injection 42B de la plaque bipolaire 40B, après avoir traversé les orifices traversants 71B de la membrane étanche 70B. Ainsi, l'écoulement d'hydrogène est homogénéisé en amont du compartiment d'homogénéisation 60B, ce qui améliore ensuite la répartition homogénéisée de l'écoulement d'hydrogène à l'entrée du circuit de distribution 50B.

En ce qui concerne la cellule 10A, le compartiment d'homogénéisation 60A de la plaque bipolaire 30A est alimenté en hydrogène à partir de conduits d'injection formés dans la plaque bipolaire 40A, communiquant avec le collecteur d'alimentation 2A et débouchant au niveau de la face cathodique de la plaque 30A. La plaque bipolaire 30A comporte ici des conduits communiquant avec le collecteur 2A mais non débouchants au niveau de la face anodique de celle-ci. Ainsi, les conduits non débouchants ne participent pas à l'alimentation fluidique du circuit de distribution 50A. L'hydrogène alimentant les conduits longitudinaux 61A du compartiment d'homogénéisation 60A provient donc des conduits d'injection de la plaque bipolaire 40A, après avoir traversé les orifices traversants 71A de la membrane étanche 70A. Ainsi, l'écoulement d'hydrogène est homogénéisé en amont du compartiment d'homogénéisation, ce qui améliore ensuite la répartition homogénéisée de l'écoulement d'hydrogène à l'entrée du circuit de distribution 50A.

Dans cet exemple, et de manière identique au mode de réalisation illustré sur la figure 5, le conduit transversal des compartiments d'homogénéisation 60A, 60B s'étend de manière continue autour des collecteurs 2A et 2B et comporte un joint périphérique étanche, de manière à éviter tout contournement fluidique des compartiments d'homogénéisation par l'hydrogène.

Des modes de réalisation particuliers viennent d'être décrits. Différentes variantes et modifications apparaîtront à l'homme du métier.

Selon une variante, la membrane étanche 70A (resp. 70B) peut présenter une pluralité d'orifices traversants, non plus uniformément répartis en regard des conduits longitudinaux 61A (resp. 61B), mais situés uniquement en regard des conduits longitudinaux 61A (resp. 61B) distaux ou éloignés vis-à-vis des conduits d'injection 42A (resp. 42B). Ainsi, l'hydrogène traversant les conduits d'injection 42A (resp. 42B) s'écoule à partir de ces conduits jusqu'aux orifices traversants puis s'introduit préférentiellement dans les conduits longitudinaux 61A (resp. 61B) situés en regard de ces orifices. Dans ce cas, il est avantageux que la plaque bipolaire 30A (resp. 30B) comporte également des conduits d'injection 32A (resp. 32B) communiquant avec le même collecteur et superposés avec les conduits d'injection 42A (resp. 42B) de la plaque bipolaire 40A (resp. 40B). Ainsi, l'écoulement d'hydrogène est davantage homogénéisé en amont du compartiment d'homogénéisation 60A (resp. 60B), ce qui améliore ensuite la répartition homogénéisé de l'écoulement d'hydrogène à l'entrée du circuit de distribution 50A (resp. 50B).

Selon une autre variante, la membrane étanche peut être remplacée par une couche en un matériau poreux adaptée à assurer la diffusion de l'écoulement d'hydrogène en direction des conduits longitudinaux, en particulier de l'écoulement provenant des conduits d'injection de la plaque bipolaire 40A, 40B. Ce matériau poreux peut être identique au matériau de la couche de diffusion (GDL, pour *gas diffusion layer,* en anglais) située entre les plaques bipolaires et le matériau électrochimiquement actif de l'électrode considérée de chaque cellule.

## Revendications

1. Empilement de cellules électrochimiques (10A, 10B),
∘ lesdites cellules électrochimiques (10A, 10B) étant réparties en N groupes (A, B) distincts de cellules, N≥2 ;
∘ chaque cellule électrochimique (10A, 10B) comportant un circuit de distribution (50A, 50B) adapté à distribuer une espèce réactive au niveau d'une électrode (21A, 21B) de la cellule ;
∘ chaque groupe de cellules (A; B) comportant un collecteur d'alimentation (2A ; 2B) distinct, disposé en amont d'une entrée (51A ; 51B) du circuit de distribution (50A ; 50B) de chaque cellule de l'empilement, et adapté à permettre l'écoulement de ladite espèce réactive vers ladite entrée du circuit de distribution des cellules (10A, 10B) dudit groupe et à bloquer l'écoulement de ladite espèce réactive vers les cellules des autres groupes ;
**caractérisé en ce qu'**au moins une première cellule (10B) parmi lesdites cellules électrochimiques comprend un compartiment d'homogénéisation (60B) comportant :
∘ une pluralité de conduits longitudinaux (61B) adaptés à recevoir l'écoulement de ladite espèce réactive provenant du collecteur d'alimentation (2B) du groupe correspondant, et à le répartir au niveau de l'entrée (51B) du circuit de distribution (50B) de la première cellule ;
∘ et un conduit transversal (62B) d'homogénéisation reliant fluidiquement les conduits longitudinaux (61B) les uns aux autres.

2. Empilement de cellules électrochimiques (10A, 10B) selon la revendication 1, dans lequel lesdits conduits longitudinaux (61B) sont interposés entre lesdits collecteurs d'alimentation (2A, 2B) et l'entrée (51B) du circuit de distribution (50B) de la première cellule (10B), et sont disposés sensiblement en regard desdits collecteurs (2A, 2B) d'une part et de ladite entrée (51B) d'autre part.

3. Empilement de cellules électrochimiques (10A, 10B) selon la revendication 1 ou 2, dans lequel la taille moyenne transversale dudit conduit transversal (62B) du compartiment d'homogénéisation (60B) est supérieure à celle de chacun desdits conduits longitudinaux (61B).

4. Empilement de cellules électrochimiques (10A, 10B) selon l'une quelconque des revendications 1 à 3, dans lequel les conduits longitudinaux (61B) et le conduit transversal (62B) du compartiment d'homogénéisation (60B) sont des organes tubulaires formés dans une première plaque bipolaire (30B) de la première cellule (10B), les organes tubulaires débouchant au niveau d'une face principale (31B) de ladite première plaque orientée vers ladite électrode (21B).

5. Empilement de cellules électrochimiques (10A, 10B) selon la revendication 4, dans laquelle la plaque bipolaire (30B) est formée de deux parties assemblées l'une à l'autre, et comporte une première et une seconde ligne d'étanchéité (38B, 39B) assurant localement l'étanchéité entre les deux parties de la plaque, la première ligne (38B) s'étendant de manière continue autour du collecteur (2A) n'alimentant pas la cellule, et la seconde ligne (39B) s'étendant de manière continue autour des collecteurs (2A, 2B) et du compartiment d'homogénéisation (60B).

6. Empilement de cellules électrochimiques (10A, 10B) selon l'une quelconque des revendications 1 à 5, dans lequel le circuit de distribution (50B) de la première cellule (10B) comporte une pluralité de canaux (52B) parallèles entre eux s'étendant à partir de ladite entrée (51B), le nombre de conduits longitudinaux (61B) étant sensiblement supérieur ou égal au nombre de canaux (52B), chaque conduit longitudinal (61B) débouchant de préférence sensiblement en regard d'un ou plusieurs canaux (52B).

7. Empilement de cellules électrochimiques (10A, 10B) selon l'une quelconque des revendications 1 à 6, dans lequel le collecteur d'alimentation (2B) adapté à alimenter ladite première cellule (10B) comporte des conduits d'injection (32B) débouchant au niveau d'une face principale (31B) d'une première plaque bipolaire (30B) de la première cellule orientée vers ladite électrode (21B), le nombre de conduits longitudinaux (61B) étant supérieur au nombre de conduits d'injection (32B), chaque conduit longitudinal (61B) débouchant de préférence sensiblement en regard d'un ou plusieurs conduits d'injection (32B).

8. Empilement de cellules électrochimiques (10A, 10B) selon l'une quelconque des revendications 1 à 7, dans lequel le ou les collecteurs d'alimentation (2A) adaptés à ne pas alimenter ladite première cellule (10B) comportent des conduits (34B) ne débouchant pas au niveau d'une face principale (31B) d'une première plaque bipolaire (30B) de la première cellule orientée vers ladite électrode (21B), le nombre de conduits longitudinaux (61B) étant supérieur au nombre de conduits non débouchants (34B), chaque conduit longitudinal (61B) débouchant sensiblement en regard d'un conduit non débouchant (34B).

9. Empilement de cellules électrochimiques (10A, 10B) selon l'une quelconque des revendications 1 à 8, dans lequel le conduit transversal (62B) du compartiment d'homogénéisation (60B) s'étend de manière continue autour desdits collecteurs d'alimentation (2A, 2B) au niveau d'une première plaque bipolaire (30B) de la première cellule et est assemblé de manière étanche à une seconde plaque bipolaire (40B) de ladite cellule.

10. Empilement de cellules électrochimiques (10A, 10B) selon l'une quelconque des revendications 1 à 9, dans lequel le conduit transversal (62B) du compartiment d'homogénéisation (60B) présente une section droite transversale dont la taille moyenne augmente à partir d'une bordure de l'entrée (51B) du circuit de distribution.

11. Empilement de cellules électrochimiques (10A, 10B) selon l'une quelconque des revendications 1 à 10, dans lequel le collecteur d'alimentation (2B) adapté à alimenter ladite première cellule (10B) comporte des conduits d'injection (42B) débouchant au niveau d'une face principale (41B) d'une seconde plaque bipolaire (40B) de la première cellule, ladite face principale de ladite seconde plaque étant orientée vers une seconde électrode (22B) séparée de la première électrode de la première cellule par une membrane électrolytique (23B), et communiquant avec les conduits longitudinaux du compartiment d'homogénéisation.

12. Empilement de cellules électrochimiques (10A, 10B) selon la revendication 11, dans lequel, entre les conduits d'injection (42B) de ladite seconde plaque bipolaire (40B) et les conduits longitudinaux (61B), est interposée une membrane étanche (70B) comportant au moins un orifice traversant (71B), celui-ci étant de préférence disposé en regard d'au moins un conduit longitudinal (61B) distal vis-à-vis des conduits d'injection (42B) de la seconde plaque bipolaire.

13. Empilement de cellules électrochimiques (10A, 10B) selon la revendication 12, dans lequel ladite membrane étanche (70B) comporte une pluralité d'orifices traversants (71B) sensiblement répartis en regard des conduits longitudinaux (61B) du compartiment d'homogénéisation.

14. Empilement de cellules électrochimiques (10A, 10B) selon la revendication 11, dans lequel, entre les conduits d'injection (42B) de la seconde plaque bipolaire (40B) et les conduits longitudinaux (61B), est interposée une couche d'un matériau poreux adaptée à assurer la diffusion de l'écoulement de l'espèce réactive en direction desdits conduits longitudinaux.

15. Empilement de cellules électrochimiques (10A, 10B) selon l'une quelconque des revendications précédentes, dans lequel chaque cellule électrochimique (10A, 10B) comporte un compartiment d'homogénéisation (60A, 60B), lesdits compartiments étant superposés les uns aux autres, et de préférence identiques les uns aux autres.

## Patentansprüche

1. Stapel von elektrochemischen Zellen (10A, 10B),
*wobei die elektrochemischen Zellen (10A, 10B) in N getrennten Zellengruppen (A, B) verteilt sind, wobei N≥2;
*jede elektrochemische Zelle (10A, 10B), eine Verteilungsschaltung (50A, 50B) umfasst, die geeignet ist, eine reaktive Spezies im Bereich einer Elektrode (21A, 21B) der Zelle zu verteilen;
*wobei jede Gruppe von Zellen (A; B) einen getrennten Versorgungskollektor (2A, 2B) umfasst, der stromaufwärts zu einem Eingang (51A; 51B) der Verteilungsschaltung (50A; 50B) jeder Zelle des Stapels angeordnet und geeignet ist, den Abfluss der reaktiven Spezies zum Eingang der Verteilungsschaltung der Zellen (10A, 10B) der Gruppe zu ermöglichen und den Abfluss der reaktiven Spezies zu den Zellen der anderen Gruppen zu blockieren;
**dadurch gekennzeichnet, dass** mindestens eine erste Zelle (10B) unter den elektrochemischen Zellen ein Homogenisierungsabteil (60B) umfasst, umfassend:
*eine Vielzahl von Längsleitungen (61B), die geeignet sind, den Abfluss der reaktiven Spezies von dem Versorgungskollektor (2B) der entsprechenden Gruppe aufzunehmen und ihn im Bereich des Eingangs (51B) der Verteilungsschaltung (50B) der ersten Zelle zu verteilen;
*und eine Querleitung (62B) zur Homogenisierung, die die Längsleitungen (61B) miteinander in Fluidverbindung bringt.

2. Stapel von elektrochemischen Zellen (10A, 10B) nach Anspruch 1, bei dem die Längsleitungen (61B) zwischen den Versorgungskollektoren (2A, 2B) und dem Eingang (51B) der Verteilungsschaltung (50B) der ersten Zelle (10B) zwischengefügt und im Wesentlichen gegenüber den Kollektoren (2A, 2B) einerseits und dem Eingang (51B) andererseits angeordnet sind.

3. Stapel von elektrochemischen Zellen (10A, 10B) nach Anspruch 1 oder 2, bei dem die durchschnittliche Querabmessung der Querleitung (62B) des Homogenisierungsabteils (60B) größer als jene jeder der Längsleitungen (61B) ist.

4. Stapel von elektrochemischen Zellen (10A, 10B) nach einem der Ansprüche 1 bis 3, bei dem die Längsleitungen (61B) und die Querleitung (62B) des Homogenisierungsabteils (60B) röhrenförmige Elemente sind, die in einer ersten bipolaren Platte (30B) der ersten Zelle (10B) ausgebildet sind, wobei die röhrenförmigen Elemente im Bereich einer Hauptfläche (31B) der ersten Platte, die zur Elektrode (21B) gerichtet ist, münden.

5. Stapel von elektrochemischen Zellen (10A, 10B) nach Anspruch 4, bei dem die bipolare Platte (30B) von zwei miteinander verbundenen Teilen gebildet ist und eine erste und eine zweite Dichtungslinie (38B, 39B) umfasst, die lokal die Dichtigkeit zwischen den zwei Teilen der Platte gewährleistet, wobei die erste Linie (38B), die sich kontinuierlich um den Kollektor (2A) erstreckt, die Zelle nicht versorgt, und sich die zweite Linie (39B) kontinuierlich um die Kollektoren (2A, 2B) und das Homogenisierungsabteil (60B) erstreckt.

6. Stapel von elektrochemischen Zellen (10A, 10B) nach einem der Ansprüche 1 bis 5, bei dem die Verteilungsschaltung (50B) der ersten Zelle (10B) eine Vielzahl von zueinander parallelen Kanälen (52B) umfasst, die sich vom Eingang (51B) aus erstrecken, wobei die Anzahl von Längsleitungen (61B) im Wesentlichen größer oder gleich der Anzahl von Kanälen (52B) ist, wobei jede Längsleitung (61B) vorzugsweise im Wesentlichen gegenüber einem oder mehreren Kanälen (52B) mündet.

7. Stapel von elektrochemischen Zellen (10A, 10B) nach einem der Ansprüche 1 bis 6, bei dem der Versorgungskollektor (2B), der dazu vorgesehen ist, die erste Zelle (10B) zu versorgen, Injektionsleitungen (32B) umfasst, die im Bereich einer Hauptfläche (31B) einer ersten bipolaren Platte (30B) der ersten Zelle, die zu der Elektrode (21B) gerichtet ist, münden, wobei die Anzahl von Längsleitungen (61B) größer als die Anzahl von Injektionsleitungen (32B) ist, wobei jede Längsleitung (61B) vorzugsweise im Wesentlichen gegenüber einer oder mehrerer Injektionsleitungen (32B) mündet.

8. Stapel von elektrochemischen Zellen (10A, 10B) nach einem der Ansprüche 1 bis 7, bei dem der oder die Versorgungskollektoren (2A), die dazu vorgesehen sind, die erste Zelle (10B) nicht zu versorgen, Leitungen (34B) umfassen, die nicht im Bereich einer Hauptfläche (31B) einer ersten bipolaren Platte (30B) der ersten Zelle, die zu der Elektrode (21B) gerichtet ist, münden, wobei die Anzahl von Längsleitungen (61B) größer als die Anzahl von nicht mündenden Leitungen (34B) ist, wobei jede Längsleitung (61B) im Wesentlichen gegenüber einer nicht mündenden Leitung (34B) mündet.

9. Stapel von elektrochemischen Zellen (10A, 10B) nach einem der Ansprüche 1 bis 8, bei dem sich die Querleitung (62B) des Homogenisierungsabteils (60B) kontinuierlich um die Versorgungskollektoren (2A, 2B) im Bereich einer ersten bipolaren Platte (30B) der ersten Zelle erstreckt und dicht mit einer zweiten bipolaren Platte (40B) der Zelle zusammengefügt ist.

10. Stapel von elektrochemischen Zellen (10A, 10B) nach einem der Ansprüche 1 bis 9, bei dem die Querleitung (62B) des Homogenisierungsabteils (60B) einen geraden Querschnitt aufweist, dessen durchschnittliche Dimension von einem Rand des Eingangs (51B) der Verteilungsschaltung aus größer wird.

11. Stapel von elektrochemischen Zellen (10A, 10B) nach einem der Ansprüche 1 bis 10, bei dem der Versorgungskollektor (2B), der dazu vorgesehen ist, die erste Zelle (10B) zu versorgen, Injektionsleitungen (42B) umfasst, die im Bereich einer Hauptfläche (41B) einer zweiten bipolaren Platte (40B) der ersten Zelle münden, wobei die Hauptfläche der zweiten Platte zu einer zweiten Elektrode (22B) gerichtet ist, die von der ersten Elektrode der ersten Zelle durch eine elektrolytische Membran (23B) getrennt ist und mit den Längsleitungen des Homogenisierungsabteils in Verbindung steht.

12. Stapel von elektrochemischen Zellen (10A, 10B) nach Anspruch 11, bei dem zwischen den Injektionsleitungen (42B) der zweiten bipolaren Platte (40B) und den Längsleitungen (61B) eine dichte Membran (70B) zwischengefügt ist, umfassend mindestens eine durchgehende Öffnung (71B), wobei diese vorzugsweise gegenüber mindestens einer distalen Längsleitung (61B) gegenüber den Injektionsleitungen (42B) der zweiten bipolaren Platte angeordnet ist.

13. Stapel von elektrochemischen Zellen (10A, 10B) nach Anspruch 12, bei dem die dichte Membran (70B) eine Vielzahl von durchgehenden Öffnungen (71B) umfasst, die im Wesentlichen gegenüber den Längsleitungen (61B) des Homogenisierungsabteils verteilt sind.

14. Stapel von elektrochemischen Zellen (10A, 10B) nach Anspruch 11, bei dem zwischen den Injektionsleitungen (42B) der zweiten bipolaren Platte (40B) und den Längsleitungen (61B) eine Schicht aus einem porösen Material zwischengefügt ist, die dazu vorgesehen ist, die Verbreitung des Abflusses der reaktiven Spezies in Richtung der Längsleitungen zu gewährleisten.

15. Stapel von elektrochemischen Zellen (10A, 10B) nach einem der vorhergehenden Ansprüche, bei dem jede elektrochemische Zelle (10A, 10B) ein Homogenisierungsabteil (60A, 60B) umfasst, wobei die Abteile übereinander angeordnet sind und vorzugsweise zueinander identisch sind.

## Claims

1. Stack of electrochemical cells (10A, 10B),
o said electrochemical cells (10A, 10B) being distributed into N separate groups (A, B) of cells, N ≥ 2;
o each electrochemical cell (10A, 10B) including a distribution circuit (50A, 50B) designed to distribute a reactive species at an electrode (21A, 21B) of the cell;
o each group of cells (A; B) including a separate supply collector (2A; 2B) positioned upstream of an input (51A; 51B) of the distribution circuit (50A; 50B) of each cell of the stack and designed to allow said reactive species to flow to said input of the distribution circuit of the cells (10A, 10B) of said group and to block the flow of said reactive species to the cells of the other groups;
**characterized in that** at least one first cell (10B) from among said electrochemical cells comprises a homogenization compartment (60B) including:
o a plurality of longitudinal ducts (61B) designed to receive the flow of said reactive species coming from the supply collector (2B) of the corresponding group, and to distribute it at the input (51B) of the distribution circuit (50B) of the first cell;
o and a transverse homogenization duct (62B) fluidically linking the longitudinal ducts (61B) to one another.

2. Stack of electrochemical cells (10A, 10B) according to Claim 1, wherein said longitudinal ducts (61B) are interposed between said supply collectors (2A, 2B) and the input (51B) of the distribution circuit (50B) of the first cell (10B), and are positioned substantially facing said collectors (2A, 2B), on the one hand, and facing said input (51B), on the other hand.

3. Stack of electrochemical cells (10A, 10B) according to Claim 1 or 2, wherein the average transverse size of said transverse duct (62B) of the homogenization compartment (60B) is greater than that of each of said longitudinal ducts (61B).

4. Stack of electrochemical cells (10A, 10B) according to any one of Claims 1 to 3, wherein the longitudinal ducts (61B) and the transverse duct (62B) of the homogenization compartment (60B) are tubular elements formed in a first bipolar plate (30B) of the first cell (10B), the tubular elements opening out at a main face (31B) of said first plate that is oriented towards said electrode (21B).

5. Stack of electrochemical cells (10A, 10B) according to Claim 4, wherein the bipolar plate (30B) is formed of two parts assembled with one another, and includes a first and a second sealing line (38B, 39B) locally ensuring sealtightness between the two parts of the plate, the first line (38B) extending continuously around the collector (2A) not supplying the cell, and the second line (39B) extending continuously around the collectors (2A, 2B) and the homogenization compartment (60B).

6. Stack of electrochemical cells (10A, 10B) according to any one of Claims 1 to 5, wherein the distribution circuit (50B) of the first cell (10B) includes a plurality of channels (52B) that are parallel to one another and extend from said input (51B), the number of longitudinal ducts (61B) being substantially greater than or equal to the number of channels (52B), each longitudinal duct (61B) preferably opening out substantially facing one or more channels (52B).

7. Stack of electrochemical cells (10A, 10B) according to any one of Claims 1 to 6, wherein the supply collector (2B) designed to supply said first cell (10B) includes injection ducts (32B) opening out at a main face (31B) of a first bipolar plate (30B) of the first cell that is oriented towards said electrode (21B), the number of longitudinal ducts (61B) being greater than the number of injection ducts (32B), each longitudinal duct (61B) preferably opening out substantially facing one or more injection ducts (32B).

8. Stack of electrochemical cells (10A, 10B) according to any one of Claims 1 to 7, wherein the supply collector(s) (2A) designed to not supply said first cell (10B) include ducts (34B) that do not open out at a main face (31B) of a first bipolar plate (30B) of the first cell that is oriented towards said electrode (21B), the number of longitudinal ducts (61B) being greater than the number of blind ducts (34B), each longitudinal duct (61B) opening out substantially facing a blind duct (34B).

9. Stack of electrochemical cells (10A, 10B) according to any one of Claims 1 to 8, wherein the transverse duct (62B) of the homogenization compartment (60B) extends continuously around said supply collectors (2A, 2B) at a first bipolar plate (30B) of the first cell and is assembled in a sealtight manner with a second bipolar plate (40B) of said cell.

10. Stack of electrochemical cells (10A, 10B) according to any one of Claims 1 to 9, wherein the transverse duct (62B) of the homogenization compartment (60B) has a cross section whose average size increases starting from an edge of the input (51B) of the distribution circuit.

11. Stack of electrochemical cells (10A, 10B) according to any one of Claims 1 to 10, wherein the supply collector (2B) designed to supply said first cell (10B) includes injection ducts (42B) opening out at a main face (41B) of a second bipolar plate (40B) of the first cell, said main face of said second plate being oriented towards a second electrode (22B) separated from the first electrode of the first cell by an electrolytic membrane (23B), and communicating with the longitudinal ducts of the homogenization compartment.

12. Stack of electrochemical cells (10A, 10B) according to Claim 11, wherein, between the injection ducts (42B) of said second bipolar plate (40B) and the longitudinal ducts (61B), there is interposed a sealtight membrane (70B) including at least one through-orifice (71B), the latter preferably being positioned facing at least one longitudinal duct (61B) which is distal with respect to the injection ducts (42B) of the second bipolar plate.

13. Stack of electrochemical cells (10A, 10B) according to Claim 12, wherein said sealtight membrane (70B) includes a plurality of through-orifices (71B) distributed substantially facing the longitudinal ducts (61B) of the homogenization compartment.

14. Stack of electrochemical cells (10A, 10B) according to Claim 11, wherein, between the injection ducts (42B) of the second bipolar plate (40B) and the longitudinal ducts (61B), there is interposed a layer of porous material, which layer is designed to ensure diffusion of the flow of the reactive species in the direction of said longitudinal ducts.

15. Stack of electrochemical cells (10A, 10B) according to any one of the preceding claims, wherein each electrochemical cell (10A, 10B) includes a homogenization compartment (60A, 60B), said compartments being stacked on top of one another and preferably being identical to one another.
